# EUROPEAN PATENT SPECIFICATION

(11) **EP 2 683 944 B1**
(45) Date of publication and mention of the grant of the patent: **11.01.2017**
(21) Application number: 12754630.7
(22) Date of filing: 07.03.2012
(51) Int. Cl.: F04D 13/08, F04D 25/06, F04D 29/10

(54) **SUBSEA MOTOR-TURBOMACHINE**
UNTERWASSERMOTOR-TURBOMASCHINE
TURBOMACHINE SOUS-MARINE

(30) Priority: 07.03.2011 NO 20110348
(43) Date of publication of application: 15.01.2014
(73) Proprietor: Aker Solutions AS, 1325 Lysaker (NO)
(72) Inventor: STINESSEN, Kjell Olav, N-0383 Oslo (NO)
(74) Representative: Hov, Espen
(86) International application number: PCT/NO2012/000023
(87) International publication number: WO 2012/121605

(56) References cited:
- EP-A2- 1 826 887
- WO-A1-03/071139
- WO-A1-2007/055591
- WO-A1-2009/125363
- US-A- 3 785 753
- US-A1- 2004 179 961
- US-A1- 2006 157 251
- US-A1- 2006 157 251

## Description

### Field of the invention

The present invention relates to subsea rotating equipment, i.e. compressors, multiphase pumps and liquid pumps driven by electric motors, and its purpose is particularly to improve the motor internals of a gas filled motor, from contamination of the compressed or pumped fluids that could harm or damage the motor. This is obtained by separating the motor and compressor, multiphase pump or pump into two compartments by oil lubricated mechanical seals.

### Description of the invention, its background and prior art

The invention protects the lube oil for the mechanical seal and bearings by prevention against gas contamination or other contamination by mechanical seals and over pressure of the lube oil compared to the internal pressure of the motor and pump. Control of pressure of the lube oil, motor atmosphere and compressor and suction pressure of the compressor, multiphase pump or liquid pump relative to each other is a key feature of the invention In the following description and patent claims will the word "compressor" also include multiphase pump and liquid pump when relevant for all of them. If there are elements of the description and claims that are relevant for only compressor, multiphase pumps or liquid pump, this will be specifically described.

The invention and several embodiments of the invention are defined by the claims, to which reference is made.

Currently only liquid (e.g. oil, or water or MEG or mixtures thereof. In the following the term "oil" will also include all other suitable liquids for bearings, mechanical seals and gear) filled motors have been used for subsea multiphase and liquid pumps. This gives a practical limitation of the power of the motor at say 4 MW and a speed of say 4000 rpm due to the frictional losses when the rotor is rotating in liquid. More power could be provided by making such motors longer, but a practical limit of length seems to be reached at around 4 MW due to rortodynamics, required number of bearings and need for space. There are identified application for subsea multiphase and liquid pumps that requires more than 4 MW, typically 6 MW, and there is therefore a need for subsea gas filled motors that can be used for such pumps because such motors can be designed for even much more than 6 MW, e.g. 25 MW which is much more than needed for pumps, and this will remove the motor power limitation for sizing of pump capacity.

With respect to subsea compressors, a prototype, the Kværner Booster Station (KBS) compressor with a 850 kW motor was designed in the early 1990 and thoroughly tested through 1993, and also refurbished tested in 2002. This compressor, which additionally to motor and compressor had a step-up gear, had oil lubricated bearings and gear box and the seal between the motor and compressor compartment was a labyrinth seal. The lube oil circuit was open, i.e. the lube oil had direct contact with the raw gas atmosphere with its contaminants (e.g. particles, water vapour, H₂S and CO₂) that made the lube oil susceptible to degradation and damage of function. Further it is a weakness of a labyrinth seal between the motor and the compressor that it does not completely segregate these two compartments, and over time there will be some ingress of raw gas into the motor atmosphere resulting in risk of degradation and damage of internal materials of the motor and of the non metallic materials in particular caused by contaminants in the raw gas. There is therefore a need for a technical seal solution that conceptually completely or nearly prevents that raw gas flows into the motor, and further there is a need for a lube oil system that is kept separated from the raw gas to eliminate the risk of degradation of the lube oil, and this is according to the invention provided by lubricated mechanical seals.

There are several patents for the KBS type of subsea compressor. Reference is made to patents NO162782, NO172075, NO172076, NO172555, NO172566 and NO173197 .The technically solutions described in these patens differ significantly from the invention by applying labyrinth seal and open lube oil circuit resulting in the risks and problems that are described above.

After the year 2000 some compressor manufacturers, subsea system suppliers and oil companies have carried out significant work to develop, design, construct, test and qualify subsea compressors with magnetic bearings to avoid the potential problems that are described above, caused by having a lube oil system. Such solutions, still being in the development phase and not fully qualified for subsea use, have also inherent potential problems. The polymeric surface materials of the bearings are susceptible to chemical attack from the raw gas with its contaminants when the motor atmosphere is raw gas, which is a common solution. This can in principle be resolved by covering the surface with a thin metal sheet, i.e. so called can bearings. This is however not considered to be a a proven solution, and it adds complication and risk in making the bearings and operation and control of them. The control system for subsea magnetic bearings that has to be located subsea and close to the bearings, is also a concern because at the current stage of technology it is being developed and qualified. Even a successful qualification will leave some risk concerns with respect to subsea operation because the electronics of the control system has a certain failure rate and the control system has quite large dimension and are heavy and therefore not easy to replace if it fails. There are also several wires with connectors and penetrators that also have their failure rate. All the concerns of this control system will be eliminated by using oil lubricated bearings according to the present invention because the lubrication system does not have any control system. A lube oil system, lubricated bearings and mechanical seals also have a risk of failing. In this case all components that together form the complete system are well known for different industrial applications and have a known failure rate that can be minimised by selection of quality of components. The novelty of the invention, compared to the mentioned industrial applications, is however the special configuration and adaptation to suit for the subsea conditions.

Reference is made to patents NO323324, NO323240, NO329089 and NO325900.

Reference is also made to the patent publications WO 2009/125363 A1, US 3 785 753 A and EP 1 826 887 A2, providing background art for pumps or compressors with a common pressure housing with a motor compartment, which can be filled with gas, and a pump or compressor compartment.

### Figures

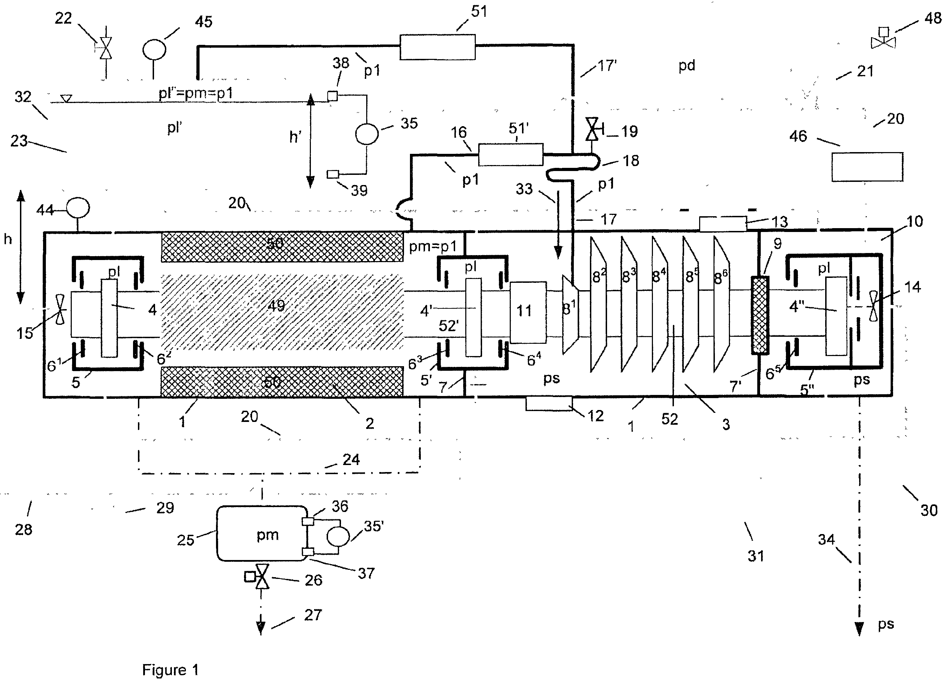

The invention is illustrated with Figures 1- 6, illustrating embodiments and details of embodiments of the invention.

### Summary of and Embodiments of the invention

The invention provides a subsea pressure booster comprising an electric motor and a compressor, multiphase pump or pump driven by the electric motor, for boosting the pressure of a subsea flow comprising petroleum gas or liquid, comprising a common pressure housing for the electric motor and compressor, multiphase pump or pump; a diaphragm separating the common pressure housing into two compartments, one compartment for the electric motor, the motor compartment is filled with gas, and one compartment for the compressor; multiphase pump or pump; a shaft connecting the electric motor to the compressor, multiphase pump or pump; bearings on the shaft; wherein the motor is operatively connected to drive the compressor, multiphase pump or pump, directly via a common shaft or a rigid or flexible coupling or via a gear coupling connecting a motor shaft to a turbomachine shaft. The turbomachine is distinguished in that it comprises at least one oil lubricated mechanical shaft seal arranged between the shaft and diaphragm ; and a lube oil pressure means providing control of the lubrication oil pressure in order to adjust said pressure to be higher than or equal to a motor housing pressure and a compressor suction pressure at all operating conditions.

The invention provides a simple and reliable solution for a subsea pressure booster for boosting the pressure of oil and gas from subsea wells and systems, allowing a gas filled motor compartment also for a pump and a multiphase pump, allowing higher effects than previously achievable without decreasing the reliability, with simple solutions for control of pressure, fluid integrity and operation. However, inert gas, that is nitrogen, noble gas or in any case gas less aggressive than the raw gas according to prior art, is preferably used in the motor compartment, using the solutions as described and illustrated in this document.

In the following will be described several embodiments of the invention that all have in common that they completely, or for all practical significance close enough to completely, protect the motor and lube oil for seals, bearing and gear (optionally) from being degraded and damaged by being contaminated by raw gas or pumped multiphase or liquid, that intermingles with the gas of the motor atmosphere or lube oil. This is obtained by control of the pressure level of lube oil, motor atmosphere and suction pressure relative to each other and by some way of ensuring that the motor atmosphere is inert and dry.

Different embodiments, in the form of motor-compressor subsea pressure boosters, will be described by reference to figures. Explanation of the reference numbers of the figures are described in Table 1 below.

**Table 1_ Explanation of reference numbers of the figures**

| **Reference no.** | **Explanation** |
|---|---|
| 1 | Common pressure housing for compressor and motor |
| 2 | Electric motor |
| 3 | Compressor or multiphase pump or liquid pump |
| 4 | Oil lubricated bearing, either radial or axial or combined |
| 5 | Housing for bearing |
| 6 | Oil lubricated mechanical seal |
| 7 | Diaphragm, partition |
| 8 | Impeller |
| 9 | Balance drum leakage, labyrinth |
| 10 | Balance drum |
| 11 | Coupling, rigid, flexible or common shaft for motor and compressor |
| 12 | Compressor inlet |
| 13 | Compressor outlet |
| 14 | Pump for lube oil circuit |
| 15 | Fan for motor gas recirculation through gas cooling circuit |
| 16, 16' | Pressure transmitting tube from compressor to motor |
| 17, 17' | Pressure transmitting tube from compressor to lube oil tank |
| 18 | Cooler for pressure transmitting gas |
| 19 | Valve for MEG supply (or other hydrate preventing chemical: e.g. DEG, TEG, methanol) |
| 20 | Lube oil pipe |
| 21 | Lube oil cooler |
| 22 | Valve for lube oil supply |
| 23 | Lube oil reservoir |
| 24 | Drainage line from motor |
| 25 | Drainage tank |
| 26 | Drainage valve; pressure relieve valve for motor gas |
| 27 | Pipe for leaked oil to discharge point at lower pressure than pm, e.g. compressor inlet or upstream separator |
| 28 | Gas cooling circuit pipe |
| 29 | Gas cooler |
| 30 | Anti-surge line for compressor or recirculation line for pump |
| 31 | Anti-surge cooler or recirculation cooler |
| 32 | Lube oil tank |
| 33 | Drainage direction of condensed liquid |
| 34 | Balance pipe |
| 35 | Level sensor |
| 36 | Level indication in drainage tank, high |
| 37 | Level indication level indicator in drainage tank , low |
| 38 | Level indication in lube oil tank, high |
| 39 | Level indication in lube oil tank, low |
| 40 | Nitrogen tank |
| 41 | Control valve for motor pressure pm |
| 42 | Control valve for lube oil pressure p" |
| 43 | Valve for refilling of compressed nitrogen by umbilical or ROV or tube from ship connected by ROV |
| 44 | Pressure transmitter of pm |
| 45 | Pressure transmitter of p" |
| 46 | Lube oil filter (optional) |
| 47 | Step-up gear |
| 48 | Anti-surge/re-circulation valve |
| 49 | Rotor |
| 50 | Stator |
| 51, 51' | Membrane, e.g. floating piston |
| 52, 52' | Shafts |
| h | Static height from bearings to low level of lube oil tank |
| h' | Static height at low level of lube oil tank, variable from low to high level |
| pd | Discharge pressure |
| pl | Lube oil pressure in bearings |
| pl' | Lube oil pressure at low level of lube oil tank |
| pm | Pressure of motor atmosphere |
| pn | Pressure of compressed nitrogen (or other actual inert gas) in tank. |
| ps | Suction pressure |
| pt | Pressure in drainage tank; approximately pt=pm |
| p1 | Pressure of first impeller or any other impeller |
| p2 | Pressure of second impeller or any impeller or discharge pressure, and impeller # is higher than the impeller that gives p1 |

The basic principle of the invention is to prevent communication of flow between compressor and motor. This is obtained by separation of the motor and compressor in two compartments, a motor and a compressor compartment, by a diaphragm with oil lubricated mechanical shaft seals, and by controlling the pressure of a lube oil such that the pressure of this in the seal is higher than both the pressure of the gas atmosphere of the motor and of the gas pressure of the suction side of the compressor.

It is important to note that the gas pressure in the balance drum of the compressor is suction pressure, which is obtained by a gas leakage from the discharge side of the compressor through a labyrinth seal and a balance pipe to the suction side of the compressor.

Mechanical seals of the invention will close by some kind of spring mechanism when the compressor is not operating, and therefore prevent intermingling of raw gas into the motor atmosphere at standstill, and it will also prevent loss of lube oil by leakage. By placing the lube oil tank at some elevation above the motor compressor, there will be a somewhat higher pressure of the lube oil inside the seals compared to the pressure inside the motor and compressor and hence any leakage will be from the lube oil side of the seals to the motor and compressor side, and thereby prevent lube oil from being contaminated.

The same principles with balance drum can be used for multiphase and liquid pumps. If other principles are used, e.g. opposed impellers for a pump or by having the pressure side of a multiphase pump or a pump at the motor, the pressure of the lube oil must be set such that it is higher than the highest fluid pressure at any of the seals.

The gas that forms the motor atmosphere, if not the gas being compressed, preferably is selected such that it is inert with respect to the motor materials including both metallic and non metallic materials. The gas can for example be dry nitrogen or dry hydrocarbon gas.

In the following will be described the invention with reference to Figures 1 to 6 and Table 1.

In the solution described in Figure 1 the motor 2 is filled by raw gas from the compressor, preferably dry, by a pressure transmitting tube 16 from one of the compressor stages or from its suction side.

There is communication between the gas inside the motor and the gas flowing through the compressor, but because there is no flow through the motor, the motor is in principle filled with the same gas volume without exchange of atmosphere meaning that the amount of contaminants is limited to one volume filling and there is not a continuous supply of contaminants like it would be if it was a flow of raw gas through the motor or if there was a labyrinth seal between compressor and motor, which is quite open for intermingling.

In the illustration of Figure 1 motor pressure pm is supplied from the stage 8¹ with pressure p1. Hence the pressure pm in the motor room will be equal to the first compressor stage pressure p1 and higher than the suction pressure ps. Drying of the gas is obtained by cooling the gas to seawater temperature or close to sea water temperature by heat exchanging to seawater by a heat exchanger 18 common for tubes 16 and 17' in tube 17. The arrangement shown in Figure 1 with a common cooler for tube 17 and 17 is of practical reasons. It could also be two separate tubes from stage 8¹ each with their cooler. In cases where cooling is found unnecessary, the cooler is omitted. Some amount of MEG (or other suitable hydrate preventing chemical) can if necessary be injected into the cooler 18 to prevent hydrate formation. The injected MEG will also have the favorable effect of drying the gas with respect to water, and also contribute to some MEG vapor pressure in the gas atmosphere. The combined result of these two mechanisms will be lowering of the water dew point of the gas, say by 5 ° C. During steady state operation there is no flow in the tube 16, and the gas will be cooled to seawater temperature. During transient operations, e.g. ramping speed of the compressor up and down or starts and stops, temperature and pressure of compressor and motor will change and there will be some flow in the tube 16 and thereby some exchange of gas between motor and compressor. Worst case is when starting or stopping the compressor and the motor and compressor is warmed up from sea water temperature to operation temperatures or in the opposite direction from operation temperatures down to sea water temperature. The direction of the equalizing flow during transients will be a result of the relative temperatures and volumes of the motor and compressor and other factors. These transient flows will however be small, and it is easy to dimension and design heat exchangers to obtain a gas temperature equal to or at the level of the sea temperature, say not more than 5 ° C above sea water temperature, and hence the gas will be dry during operation when the motor is warm and probably also at standstill when cooled down to sea water temperature because the small amount of water vapor that might flow from the compressor through the tube 16 to the motor will be diluted by the dry gas in the motor. If condensation should occur it will be insignificantly small with respect to cause harm to the motor materials if the raw gas has insignificant amounts of acid forming components like H₂S and CO₂.

If the pressure pl" is supplied from one of the compressor impellers and at a higher pressure than the motor pressure, the lube oil tank 32 can be placed besides or under the pressure housing 1 when the pressure p" is high enough to lift the oil into the bearings and seals and give them an overpressure relative to the motor pressure and the compressor suction pressure.

A membrane 51 can be inserted in the pressure transmitting tubes 16, 17, 17' to further prevent flow communication between compressor and motor rooms at transient conditions and also by diffusion at steady-state. The membrane can e.g. be of the floating piston type, bellow type or a flexible polymeric material. The volume capacity of the membrane 51 for gas expansion designed to accommodate the worst case of volume difference change between compressor and motor rooms and between compressor and lube oil tank.

In Figure 1 the pressure above the liquid level in the lube oil tank will be the same as the motor pressure pm and equal to the first stage compressor pressure p1. The gas will be kept dry by the same heat exchanger as for the motor gas. If the lube oil tank 32 is elevated above the bearings 5, 5', 5" of the motor-compressor 1, 2, 3, the lube oil pressure in the bearings at standstill will be pl = pm + h +h', and pm=ps, i.e. pl>pm=ps. During operation the pressure difference between pl and pm can be arranged to be higher than by standstill by supplying the oil from the pressure side of the lube oil pump 15. If the static height is large enough compared to pressure losses in the suction pipes and bearings, the bearing can be on the suction side of the pump. In the figure, the pump is connected to and run by the compressor shaft either directly or by some mechanical gear or transmission or by magnetic coupling or magnetic gear, but the pump can also be a separate pump arranged some place along the lube oil circuit 20 including inside the lube oil tank 32. When the pump is located outside the compressor in the lube oil circuit, it can be arranged to be separately retrievable and there can be several pumps to have redundancy. In case of redundant pumps arranged in parallel or series, there must be a valve arrangement, including check valves, such that it is possible to automatically continue operation with only one pump in operation, or the setting of valves can be arranged manually from surface (platform or onshore) or even by ROV. Consumption of oil by leakage through a seal is small, in the range of 1 litre per day, and for the five seals indicated in Figure 1 there will be a total leakage per day in the range of 5 litres, i.e. around 2 m³ per year. By for instance dimensioning volume of the lube oil tank to 5 m³, it will only be necessary to top up the every second year by ROV or supply of oil by umbilical or even by exchange of the empty tank by a full tank. Another method could be to exchange the almost empty tank with a full tank at required intervals. Practical considerations including reliability and cost will be basis for selection of solution from case to case.

If lube oil is supplied from surface directly to the lube oil circuit without a buffer tank, there will be necessary to control the lube oil pressure pl by some remedy, e.g. a Pressure Volume Regulator (PVR) that is well known form applications for multiphase and liquid pumps. More traditional control of pl relative to pm and ps can also be applied, because there will normally not be need for very quick control to keep pl>pm and ps.

Practical considerations including reliability and cost should be the basis for selection of solution from case to case.

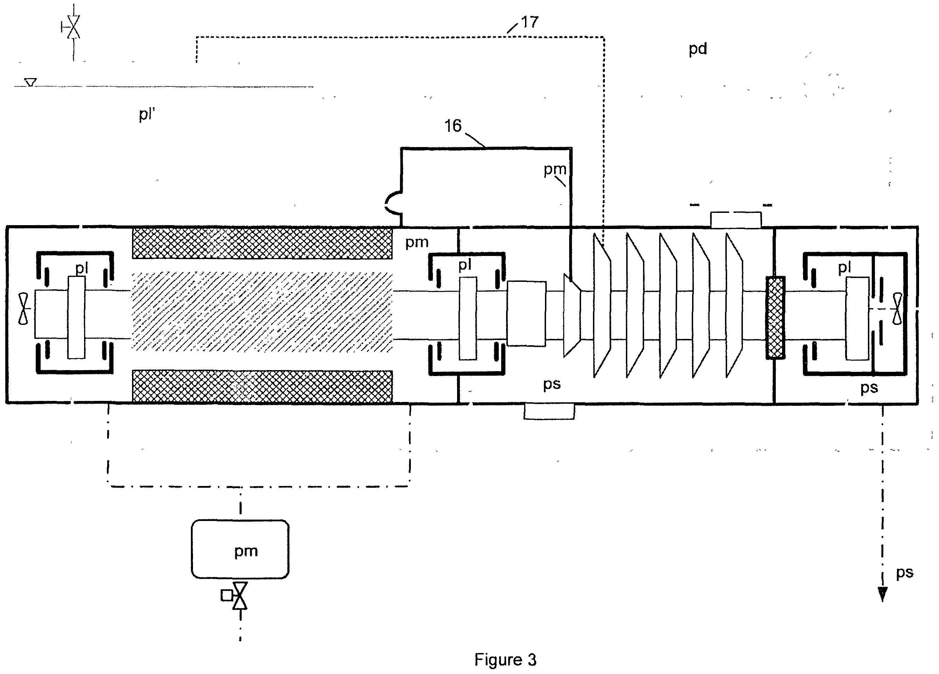

Drainage of the oil leaked into the motor from the seals 6¹, 6² and 6³, typically around 3 litres per day, is for the embodiment of Figures 1 and 3 easy during operation because the pressure pm=p1 of the drain tank 25 is higher than suction pressure ps, and the collected leakage oil can be routed to e.g. a separator, the balance gas line 34 or to the gas pipe upstream the compressor.

If for instance the volume of the drainage tank is 100 I, there will in theory only to be necessary to drain in the range of once per month. The drainage can be arranged to be automatically by having some kind of level sensor 35 (pressure difference, nucleonic, other) that gives a signal to open the drainage valve 26 when a set high level 36 is reached as will as closing when a low level 37 is reached. Drainage at pre set intervals is also an option, however more risky and so is manual operation of valve 26 based on readings from level indicator. Control of the opening of the valve 26 is such that no gas blows out from the motor during drainage.

The valve 26 can also act to reduce the pressure of the motor if it during some mode of operation should be higher than desired. A signal from a pressure transmitter 44 that senses the motor pressure is then the basis for operation of valve 26.

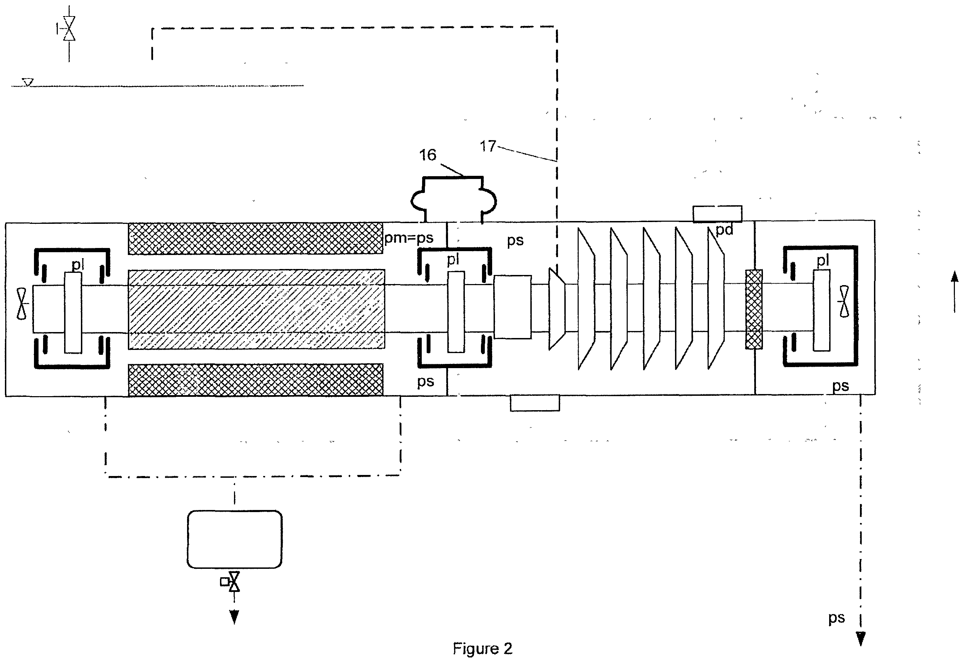

In Figure 2 is given an embodiment of the invention quite similar to the embodiment of Figure 1, but the difference is that the pressure in the motor is pm=ps, and the gas pressure above the liquid level in the lube oil tank pl"=p1. In this case can be arranged heat exchangers (not shown) in the pressure transmitting tubes 16,17 with MEG injection if necessary similar to 18 in Figure 1.

In the embodiment of Figure 2, drainage to a point with pressure of ps will require some static over height which can be obtained by sufficient elevation of the drainage tank, which is below the motor 2, compared to the selected drainage point.

In Figure 3 is illustrated an embodiment where pl (pressure in seals and bearings)=p2 +h+h'+ lube oil pump pressure>pm=p1.

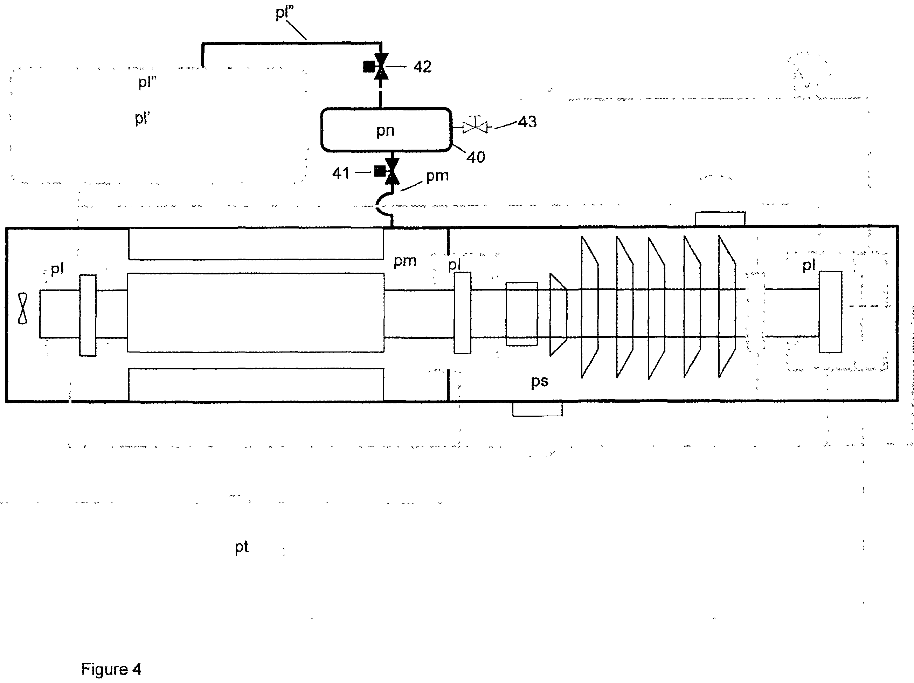

Figure 4 illustrates an embodiment that completely assures an inert motor atmosphere of nitrogen with small risk of contamination from the compressor atmosphere, which is a suitable solution if the raw gas contains significant contamination of aggressive components (e.g. H₂S and CO₂), and that also better assures a dry motor atmosphere and no condensation (hydrocarbons and water) if there is doubt about effect of the condensers 18, 18'. The atmosphere above the lube oil is protected by nitrogen in a similar way.

Compressed nitrogen (in the term nitrogen is also included any other suitable inert gas) at high pressure, i.e. at higher pressure than required to keep pl higher than both ps and pm, e.g. 300 bar or higher in the tank 40. Because the nitrogen consumption in theory is zero both at operation and standstill, the tank can be quite small, e.g. 2 m³ and still allow for long intervals between refilling. Refilling can be done either by exchanging the nitrogen tank, connect a pipe from a ship by ROV and supply from the ship or by tube in umbilical. Pressure of the motor pm is adjusted by supplying an amount of nitrogen that results in the desired pressure. To obtain this the motor must have a pressure transmitter, and the supply of nitrogen by valve 41 is controlled by the pressure, either by an automatic control or manually from surface. Control of the pressure pl" in the atmosphere above the lube oil level in the lube oil tank is achieved in a similar way.

A mixed solution where the motor is supplied with nitrogen and the lube oil tank atmosphere with gas pressure from the compressor could also be applied in some cases, i.e. a combination of the embodiments in Figure1 and 3 and Figure 4.

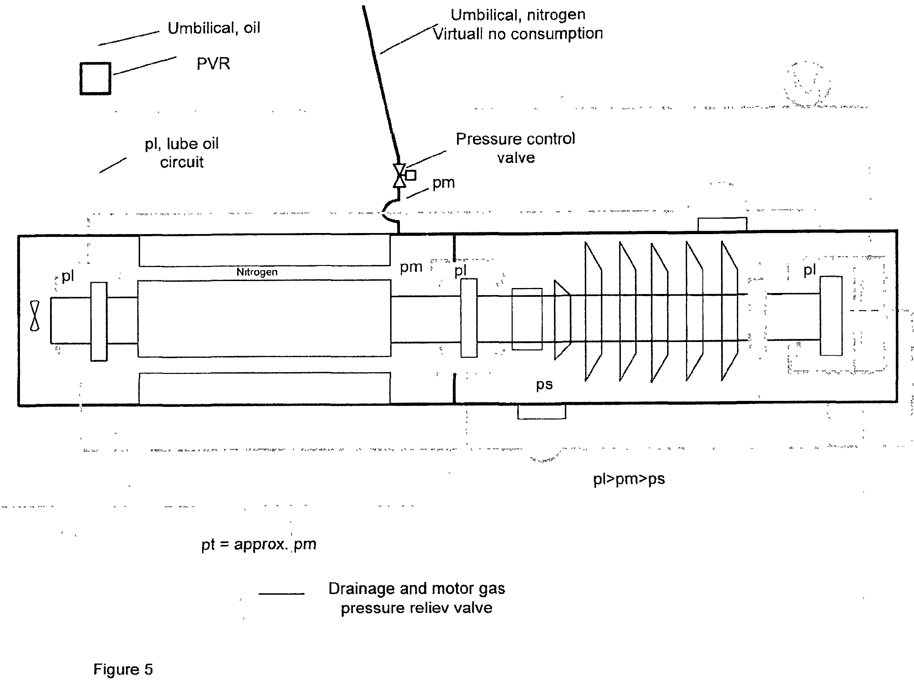

Yet a solution, shown in Figure 5, is to prime the motor by initially filling it with nitrogen, and then close the nitrogen supply valve and have pressure supply to the motor by some of the solutions of Figure 1 to 3. Some contamination of the motor atmosphere by intermingling of raw compressor gas caused by diffusion or by relative volume changes of motor and compressor room during transients, especially starts and stops, will not cause harm because condensation of water and hydrocarbons will be prevented by dilution of the contaminants and so will be possible content of H₂S, CO₂ and other harmful contaminants in the raw gas. At intervals or initiated by measurement of contaminants in the motor atmosphere, purging can be performed of the motor room by nitrogen to almost re-establish a pure nitrogen atmosphere. By inserting a membrane 51 in the pressure transmitting tube 16, contamination of the motor atmosphere by raw gas will be almost completely prevented.

Compressed nitrogen (in the term nitrogen is also included any other suitable inert gas) at high pressure, i.e. at higher pressure than required to keep pl higher than both ps and pm, e.g. 300 bar or higher can be supplied to the tank 40. Because the nitrogen consumption in theory is zero both at operation and standstill, the tank can be quite small, e.g. 3 m³ and still allow for long intervals between refilling. Refilling can be done either by exchanging the nitrogen tank, connect a pipe from a ship by ROV and supply from the ship or by tube in umbilical. Pressure of the motor pm is adjusted by supplying an amount of nitrogen that results in the desired pressure. To achieve this, the motor must have a pressure transmitter, and the supply of nitrogen by valve 41 is controlled by the pressure, either by an automatic control or manually from surface. Control of the pressure pl" in the atmosphere above the lube oil level in the lube oil tank is obtain in a similar way.

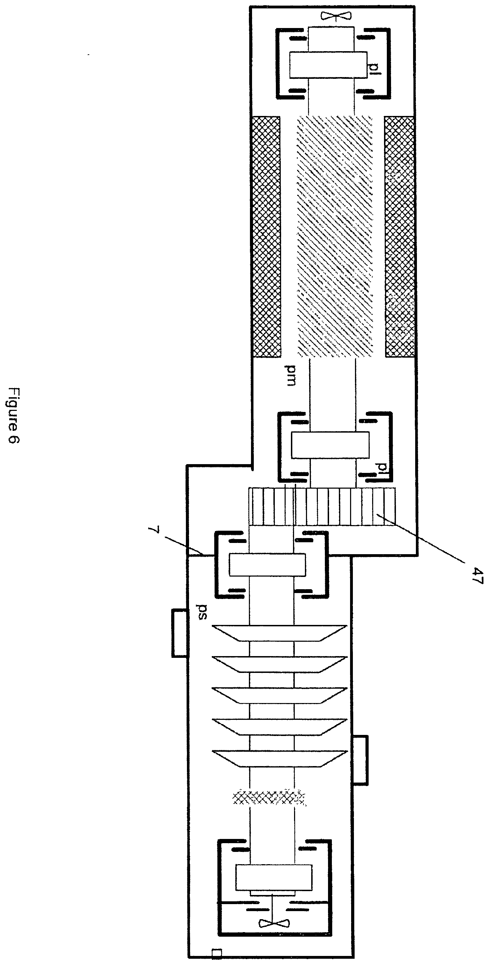

Finally an embodiment is shown Figure 6 where a mechanical step-up gear (either parallel or planet gear or any suitable type) with for instance a step-up of 3:1 is introduced between the motor and the compressor. This will allow that the Variable Speed Drive (VSD) for the motor can be surface located and still transmit electric power to the compressor motor over a long distance without Ferranti effect and instability by supplying the electric power at low frequency, e.g. at the level of 50 Hz ± 20 Hz, which gives a speed of a 2-polemotor of 3000 ± 1200 rpm, and the compressor a speed can then be varied from 5400 to 12600 rpm in the case of a step-up of 3:1. Both transmission frequency and step-up ratio can be selected different from the example according to what is best suitable from case to case. Pressure control of lube oil and motor atmosphere can be according to any of the embodiments given presented in Figure 1 to 4.

A conceivable embodiment of the lube oil circuit could be an "open circuit" which implies that oil that leaks into the motor compartment and collected in the drainage tank 25 and pumped back into the lube oil circuit by some means. This can be obtained in different ways. A pump can for instance be installed to pump from the discharge of the tank 25 and into the lube oil circuit 20 or to the lube oil tank 32 or any other suitable point in the lube oil circuit. Alternatively the pressure pm in the motor can temporarily for a short period, say seconds, be set high enough to lift the oil in tank 25 into the lube oil circuit. The negative feature of this is possible contamination of the lube oil.

In all embodiments of Figures 1-6 a particle filter can be installed at some suitable point in the lube oil circuit. A bypass can be arranged with automatic change over to a shunt pipe around the filter in cases where the filter is clogged and the pressure loss over the filter becomes unacceptable high. The change over to the shunt pipe is controlled by the pressure differential over the filter.

The subsea pressure booster, turbomachine, compressor, multiphase pump or pump of the invention can include any feature as described or illustrated in this document, in any functional combination, each such combination is an embodiment of the present invention. The invention also provides use of the subsea pressure booster of the invention, for boosting the pressure of flow from subsea oil and/or gas wells or systems.

## Claims

1. Subsea pressure booster comprising an electric motor (2) and a compressor (3), multiphase pump or pump driven by the electric motor, for boosting the pressure of a subsea flow comprising petroleum gas or liquid, comprising a common pressure housing (1) for the electric motor and compressor, multiphase pump or pump; a diaphragm (7) separating the common pressure housing into two compartments, one compartment for the electric motor, the motor compartment is filled with gas, and one compartment for the compressor; multiphase pump or pump; a shaft connecting the electric motor to the compressor, multiphase pump or pump; bearings on the shaft; wherein the motor is operatively connected to drive the compressor, multiphase pump or pump, directly via a common shaft or a rigid or flexible coupling or via a gear coupling connecting the motor shaft to the compressor, multiphase pump or pump shaft, **characterised in that** the compressor, multiphase pump or pumps comprises at least one oil lubricated mechanical shaft seal (6) arranged between the shaft (52) and diaphragm (7) ; and a lube oil pressure means providing control of the lubrication oil pressure in order to adjust said pressure to be higher than or equal to a motor compartment pressure and a compressor, multiphase pump or pumps suction pressure at all operating conditions.

2. Subsea pressure booster according to claim 1 ***characterised in that*** a gas pressure above a lube oil in a lube oil tank (23) is equal to the pressure of a first impeller (p1) or any other impeller, which pressure is transmitted to the lube oil tank (23) from said impeller by tubes (17, 17') or by tubing (17') only

3. Subsea pressure booster according to claim 1 ***characterised in that*** a pressure (pl") above a lube oil in a lube oil tank and in the motor compartment is supplied from a nitrogen reservoir

4. Subsea pressure booster according to any of claim 1 to 3 ***characterised in that*** an arrangement for handling oil drained out is provided, for drainage of oil that leaks into the motor compartment

5. Subsea pressure booster according to claim 4 ***characterised in that*** oil that has leaked into the motor compartment is pumped back to a lube oil circuit.

6. Subsea pressure booster according to claim 1, **characterised in that** it comprises a motor gas means controlling the pressure and reducing the humidity of the motor compartment gas.

7. Subsea pressure booster according to claim 6, **characterised in that** the motor and the compressor, multiphase pump or pump are connected via at least one shaft, a common pressure housing encapsulates the motor and the compressor, multiphase pump or pump but a partition in the pressure housing separates the common pressure housing into a motor housing and a turbomachine housing, a lubrication oil tank is arranged at a higher elevation than the pressure housing, lubrication oil lines are arranged from a lower oil filled part of said lubrication oil tank to mechanical seals at either end of the mechanical shaft and at either side of the partition, a line is arranged from a first stage of the compressor, multiphase pump or pump to an upper gas filled part of the lubrication oil tank, the elevation of the lubrication oil tank and variable overpressure provided by the line from the compressor, multiphase pump or pump first stage provide an automatically adjustable lubrication oil overpressure, the motor housing is operatively connected to a lubrication oil drain tank, a pressure balancing line is arranged from the first stage of the compressor, multiphase pump or pump to the motor housing, and a gas drying device such as a sea water cooled heat exchanger and a Ethylene glycol injection means is arranged in or operatively connected to the pressure balancing line.

8. Subsea pressure booster according to any one of claim 1-7, **characterised in that** the mechanical shaft seals comprises a spring or another biasing element which together with the lube oil pressure means close the seal dependent on the rotations per minute (rpm) of the shaft, from a closed position at 0 rpm to a maximum open position at maximum rpm.

9. Subsea pressure booster according to claim 1-8, **characterised in that** a lubrication oil tank has ROV-operable connections and lifting means in order to be replaceable by an ROV (Remotely Operable Vehicle).

10. Subsea pressure booster according to claim 1, comprising lube oil pressure means as a separate lubrication oil tank arranged at a higher elevation than the compressor, multiphase pump or pump pressure housing for each mechanical seal or group of mechanical seals operating at common pressure, a lubrication oil line is via an oil filled part of a piston cylinder arranged from a lower oil filled part of said lubrication oil tank to the or each mechanical seal, a one way valve such as a check valve is arranged in the lubrication oil line between the cylinder and the tank, the valve is directed to open up for lubrication oil supply from the tank only when the seal pressure is below the tank pressure, a line is arranged from a first pressure stage of the compressor, multiphase pump or pump to an upper gas filled part of the lubrication oil tank, and a line is arranged from a second pressure stage to a gas filled side of the piston cylinder, the piston cylinder may include a spring providing a minimum overpressure of the mechanical seal or/and the pressure of the second pressure stage minus the first pressure stage may provide the overpressure, said overpressure being in the range 40-0 bar, more preferably 20-0 bar, most preferably about 5 bar.

11. Subsea pressure booster according to claim 1 - 10, wherein the subsea pressure booster is a motor-compressor, **characterised in that** it comprises an oil tank arranged besides or under the motor-compressor if pressure above the lube oil is supplied from one of the compressor impellers.

## Patentansprüche

1. Unterwasserdruckerhöher, umfassend einen elektrischen Motor (2) und einen Kompressor (3), eine Multiphasenpumpe oder eine Pumpe, welche durch den elektrischen Motor angetrieben ist, zum Erhöhen des Drucks eines Petroleumgas oder Flüssigkeit umfassenden Unterwasserstroms, umfassend ein gemeinsames Druckgehäuse (1) für den elektrischen Motor und den Kompressor, die Multiphasenpumpe oder Pumpe; eine Membran (7), welche das gemeinsame Druckgehäuse in zwei Abteile trennt, ein Abteil für den elektrischen Motor, wobei das Motorabteil mit Gas gefüllt ist, und ein Abteil für den Kompressor, die Multiphasenpumpe oder Pumpe; eine Welle, welche den elektrischen Motor mit dem Kompressor, der Multiphasenpumpe oder Pumpe verbindet; Lager auf der Welle; wobei der Motor wirkungsverbunden ist, um den Kompressor, die Multiphasenpumpe oder Pumpe anzutreiben, direkt über eine gemeinsame Welle oder eine steife oder flexible Kupplung oder über eine Getriebekupplung, die die Motorwelle mit der Welle des Kompressors, der Multiphasenpumpe oder Pumpe verbindet, **dadurch gekennzeichnet, dass** der Kompressor, die Multiphasenpumpe oder Pumpe zumindest eine ölgeschmierte mechanische Wellendichtung (6) umfasst, welche zwischen der Welle (52) und der Membran (7) angeordnet ist; und ein Schmieröldruckmittel, welches ein Mittel zum Steuern des Schmieröldrucks bereitstellt, um den Druck so einzustellen, dass dieser höher oder gleich hoch wie ein Motorabteildruck und ein Saugdruck des Kompressors, der Multiphasenpumpe oder Pumpe in allen Betriebsbedingungen ist.

2. Unterwasserdruckerhöher nach Anspruch 1, **dadurch gekennzeichnet, dass** ein Gasdruck oberhalb eines Schmieröls in einem Schmieröltank (23) gleich dem Druck eines ersten Propellers (p1) oder eines weiteren Propellers ist, welcher Druck auf den Schmieröltank (23) von dem Propeller lediglich durch Rohre (17, 17') oder durch Rohrleitungen (17') übertragen wird.

3. Unterwasserdruckerhöher nach Anspruch 1, **dadurch gekennzeichnet, dass** ein Druck (pl") oberhalb eines Schmieröls in einem Schmieröltank und in dem Motorabteil aus einem Stickstoffbehälter versorgt wird.

4. Unterwasserdruckerhöher nach einem der Ansprüche 1 bis 3, **dadurch gekennzeichnet, dass** eine Anordnung zur Handhabung von abgelaufenem Öl vorgesehen ist, zur Ableitung von Öl, das in das Motorabteil ausläuft.

5. Unterwasserdruckerhöher nach Anspruch 4, **dadurch gekennzeichnet, dass** das Öl, das in das Motorabteil ausgelaufen ist, in den Schmierölkreislauf zurückgepumpt wird.

6. Unterwasserdruckerhöher nach Anspruch 1, **dadurch gekennzeichnet, dass** er ein Motorgasmittel umfasst, welches den Druck steuert und die Feuchtigkeit des Motorabteilgases reduziert.

7. Unterwasserdruckerhöher nach Anspruch 6, **dadurch gekennzeichnet, dass** der Motor und der Kompressor, die Multiphasenpumpe oder Pumpe über zumindest eine Welle verbunden sind, ein gemeinsames Druckgehäuse den Motor und den Kompressor, die Multiphasenpumpe oder Pumpe umgibt, aber eine Abtrennung in dem Druckgehäuse das gemeinsame Druckgehäuse in ein Motorgehäuse und ein Turbomaschinengehäuse teilt, wobei ein Schmieröltank an einer erhöhten Position bezogen auf das Druckgehäuse angeordnet ist, wobei Schmierölleitungen von einem unteren, mit Öl gefüllten Teil des Schmieröltanks zu mechanischen Dichtungen an jedem der Enden der mechanischen Welle und jeder Seite der Trennwand angeordnet sind, wobei eine Leitung zwischen einer ersten Stufe des Kompressors, der Multiphasenpumpe oder Pumpe und einem oberen gasgefüllten Teil des Schmieröltanks angeordnet ist, wobei die erhöhte Position des Schmieröltanks und ein variabler, durch die Leitung von der ersten Stufe des Kompressors, der Multiphasenpumpe oder Pumpe bereitgestellter Überdruck einen automatisch anpassbaren Schmierölüberdruck bereitstellen, wobei das Motorgehäuse mit einem Schmierölablasstank wirkungsverbunden ist, wobei eine Druckausgleichsleitung zwischen der ersten Stufe des Kompressors, der Multiphasenpumpe oder Pumpe und dem Motorgehäuse angeordnet ist, und eine Gastrocknungsvorrichtung wie ein meerwassergekühlter Wärmetauscher und ein Ethylenglykol-Einspritzmittel in der Druckausgleichsleitung angeordnet oder damit wirkungsverbunden ist.

8. Unterwasserdruckerhöher nach einem der Ansprüche 1 bis 7, **dadurch gekennzeichnet, dass** die mechanische Wellendichtung eine Feder oder ein anderes Vorspannelement umfasst, welches zusammen mit dem Schmieröldruckmittel die Dichtung schließt, abhängig von den Umdrehungen pro Minute (rpm) der Welle, von einer Schließstellung bei 0 rpm zu einer maximal offenen Stellung bei maximaler Drehzahl.

9. Unterwasserdruckerhöher nach einem der Ansprüche 1 bis 8, **dadurch gekennzeichnet, dass** ein Schmieröltank ROV-bedienbare Verbindungen und Hebemittel aufweist, und durch ein ROV (ferngesteuertes Fahrzeug) ersetzbar ist.

10. Unterwasserdruckerhöher nach Anspruch 1, umfassend Schmieröldruckmittel als einen abgetrennten Schmieröltank, welcher an einer höheren Position als das Druckgehäuse des Kompressors, der Multiphasenpumpe oder Pumpe für jede mechanische Dichtung oder Gruppe von mechanischen Dichtungen angeordnet ist, welche bei einem gemeinsamen Druck betrieben werden, wobei eine Schmierölleitung über ein ölgefülltes Teil eines Kolbenzylinders zwischen einem unteren ölgefüllten Teil des Schmieröltanks und der oder jeder mechanischen Dichtung angeordnet ist, wobei ein Einwegeventil wie ein Rückschlagventil in der Schmierölleitung zwischen dem Zylinder und dem Tank angeordnet ist, wobei das Ventil dazu ausgebildet ist, zur Ölschmierversorgung von dem Tank nur dann zu öffnen, wenn der Dichtdruck unterhalb des Tankdrucks liegt, wobei eine Leitung zwischen einer ersten Druckstufe des Kompressors, der Multiphasenpumpe oder Pumpe und einem oberen gasgefüllten Teil des Schmieröltanks angeordnet ist, und wobei eine Leitung zwischen einer zweiten Druckstufe und einer gasgefüllten Seite des Kolbenzylinders angeordnet ist, wobei der Kolbenzylinder eine Feder umfassen kann, welche einen minimalen Überdruck der mechanischen Dichtung bereitstellt oder/und wobei der Druck der zweiten Druckstufe minus dem Druck der ersten Druckstufe den Überdruck bereitstellt, wobei der Überdruck im Bereich vom 40 bis 0 bar, bevorzugt 20 bis 0 bar, besonders bevorzugt etwa 5 bar ist.

11. Unterwasserdruckerhöher nach einem der Ansprüche 1 bis 10, wobei der Unterwasserdruckerhöher ein Motorkompressor ist, **dadurch gekennzeichnet, dass** er einen Öltank umfasst, welcher neben oder unter dem Motorkompressor angeordnet ist, falls ein Druck oberhalb des Schmieröls von einem der Kompressorpropeller geliefert wird.

## Revendications

1. Surpresseur sous-marin comprenant un moteur électrique (2) et un compresseur (3), une pompe multiphase ou une pompe entraînés par le moteur électrique, pour augmenter la pression d'un écoulement sous-marin comprenant du pétrole gazeux ou liquide, comprenant un carter de pression commun (1) pour le moteur électrique et le compresseur, la pompe multiphase ou la pompe ; un diaphragme (7) séparant le carter de pression commun en deux compartiments, un compartiment pour le moteur électrique, le compartiment moteur étant rempli de gaz, et un compartiment pour le compresseur, la pompe multiphase ou la pompe ; un arbre reliant le moteur électrique au compresseur, à la pompe multiphase ou à la pompe ; des paliers sur l'arbre ; dans lequel le moteur est fonctionnellement relié pour entraîner le compresseur, la pompe multiphase ou la pompe, directement par le biais d'un arbre commun ou d'un organe d'accouplement rigide ou flexible ou par le biais d'un organe d'accouplement à engrenage reliant l'arbre de moteur à l'arbre de compresseur, de pompe multiphase ou de pompe,
**caractérisé en ce que** le compresseur, la pompe multiphase ou la pompe comprend au moins un joint d'arbre mécanique lubrifié par huile (6) agencé entre l'arbre (52) et le diaphragme (7) ; et un moyen de pression d'huile de graissage permettant la régulation de la pression d'huile de lubrification afin d'ajuster ladite pression pour qu'elle soit supérieure ou égale à une pression de compartiment moteur et à une pression d'aspiration de compresseur, de pompe multiphase ou de pompe dans toutes les conditions de fonctionnement.

2. Surpresseur sous-marin selon la revendication 1 **caractérisé en ce qu'**une pression de gaz au-dessus d'une huile de graissage dans une cuve d'huile de graissage (23) est égale à la pression d'un premier impulseur (p1) ou de tout autre impulseur, laquelle pression est transmise à la cuve d'huile de graissage (23) depuis ledit impulseur par des tubes (17, 17') ou par le tubage (17') uniquement.

3. Surpresseur sous-marin selon la revendication 1 **caractérisé en ce qu'**une pression (pl") au-dessus d'une huile de graissage dans une cuve d'huile de graissage et dans le compartiment moteur est apportée depuis un réservoir d'azote.

4. Surpresseur sous-marin selon l'une quelconque des revendications 1 à 3 **caractérisé en ce qu'**un agencement destiné à manipuler l'huile vidangée est prévu, pour la vidange d'huile qui fuit dans le compartiment moteur.

5. Surpresseur sous-marin selon la revendication 4 **caractérisé en ce que** de l'huile qui a fui dans le compartiment moteur est repompée dans un circuit d'huile de graissage.

6. Surpresseur sous-marin selon la revendication 1, **caractérisé en ce qu'**il comprend un moyen de gaz moteur régulant la pression et réduisant l'humidité du gaz de compartiment moteur.

7. Surpresseur sous-marin selon la revendication 6, **caractérisé en ce que** le moteur et le compresseur, la pompe multiphase ou la pompe sont reliés par le biais d'au moins un arbre, un carter de pression commun renferme le moteur et le compresseur, la pompe multiphase ou la pompe mais une cloison dans le carter de pression sépare le carter de pression commun en un carter de moteur et en un carter de turbomachine, une cuve d'huile de lubrification est agencée à une élévation supérieure au carter de pression, des conduites d'huile de lubrification sont agencées depuis une partie inférieure remplie d'huile de ladite cuve d'huile de lubrification jusqu'à des joints mécaniques aux deux extrémités de l'arbre mécanique et de chaque côté de la cloison, une conduite est agencée depuis un premier étage du compresseur, de la pompe multiphase ou de la pompe jusqu'à une partie supérieure remplie de gaz de la cuve d'huile de lubrification, l'élévation de la cuve d'huile de lubrification et la surpression variable fournies par la conduite partant du premier étage du compresseur, de la pompe multiphase ou de la pompe fournissent une surpression d'huile de lubrification automatiquement ajustable, le carter de moteur est fonctionnellement relié à une cuve de vidange d'huile de lubrification, une conduite d'équilibrage de pression est agencée depuis le premier étage du compresseur, de la pompe multiphase ou de la pompe jusqu'au carter de moteur, et un dispositif d'assèchement de gaz tel qu'un échangeur de chaleur refroidi à l'eau de mer et un moyen d'injection d'éthylène glycol est agencé dans la conduite d'équilibrage de pression ou est fonctionnellement relié à celle-ci.

8. Surpresseur sous-marin selon l'une quelconque des revendications 1-7, **caractérisé en ce que** les joints d'arbre mécaniques comprennent un ressort ou un autre élément de sollicitation qui, avec le moyen de pression d'huile de graissage, ferme le joint en fonction du nombre de tours par minute (rpm) de l'arbre, depuis une position fermée à 0 rpm jusqu'à une position ouverte maximale au rpm maximum.

9. Surpresseur sous-marin selon les revendications 1-8, **caractérisé en ce qu'**une cuve d'huile de lubrification comporte des organes de liaison actionnables par ROV et un moyen de levage afin de pouvoir être remplacée par un ROV (véhicule actionnable à distance).

10. Surpresseur sous-marin selon la revendication 1, comprenant un moyen de pression d'huile de graissage en tant que cuve d'huile de lubrification séparée agencé à une élévation supérieure au carter de pression du compresseur, de la pompe multiphase ou de la pompe pour chaque joint mécanique ou groupe de joints mécaniques fonctionnant à une pression commune, une conduite d'huile de lubrification passe par une partie remplie d'huile d'un cylindre à piston agencé depuis une partie inférieure remplie d'huile de ladite cuve d'huile de lubrification jusqu'au ou jusqu'à chaque joint mécanique, un clapet unidirectionnel tel qu'un clapet de retenue est agencé dans la conduite d'huile de lubrification entre le cylindre et la cuve, le clapet a l'ordre de s'ouvrir pour apporter l'huile de lubrification depuis la cuve uniquement quand la pression d'étanchéité est inférieure à la pression de la cuve, une conduite est agencée depuis un premier étage de pression du compresseur, de la pompe multiphase ou de la pompe jusqu'à une partie supérieure remplie de gaz de la cuve d'huile de lubrification, et une conduite est agencée depuis un second étage de pression jusqu'à un côté rempli de gaz du cylindre à piston, le cylindre à piston peut inclure un ressort fournissant une surpression minimale du joint mécanique et/ou la pression du second étage de pression moins le premier étage de pression peut fournir la surpression, ladite surpression étant dans la plage de 40-0 bars, plus préférablement de 20-0 bars, idéalement d'environ 5 bars.

11. Surpresseur sous-marin selon les revendications 1-10, dans lequel le surpresseur sous-marin est un moteur-compresseur, **caractérisé en ce qu'**il comprend une cuve d'huile agencée à côté ou sous le moteur-compresseur si la pression au-dessus de l'huile de graissage est apportée à partir de l'un des impulseurs de compresseur.
